# EUROPÄISCHE PATENTSCHRIFT

(11) **EP 1 911 502 B1**
(45) Veröffentlichungstag und Bekanntmachung des Hinweises auf die Patenterteilung: **27.05.2009**
(21) Anmeldenummer: 07018656.4
(22) Anmeldetag: 22.09.2007
(51) Int. Cl.: B01D 45/08

(54) **Tropfenabscheideranordnung**
Arrangement of droplet separators
Arrangement de separateurs de gouttelettes

(30) Priorität: 26.09.2006 DE 102006045467
(43) Veröffentlichungstag der Anmeldung: 16.04.2008
(73) Patentinhaber: Munters Euroform GmbH, 52068 Aachen (DE)
(72) Erfinder: Frahm , Joachim, 52134 Herzogenrath (DE); Jansen, Matthias, 52223 Stolberg (DE); Kaiser, Roman, 522490 Eschweiler (DE); Kanka, Helmut, 47178 Duisburg (DE); Krauss, Roland, 41836 Hückelhoven (DE); Wandres, Peter, 52066 Aachen (DE)
(74) Vertreter: Hauck Patent- und Rechtsanwälte

(56) Entgegenhaltungen:
- EP-A- 0 747 107
- WO-A-20/05107921
- DE-A1-3102005 056 54
- DE-C1- 3 434 133
- DE-U1- 20 023 285
- DE-U1- 20 302 380
- DE-U1-4202005 002 67
- US-A- 4 028 077

## Beschreibung

Die vorliegende Erfindung betrifft eine Tropfenabscheideranordnung für im Querschnitt runde Rauchgaswäscher u.dgl., die mindestens eine Tropfenabscheiderlage aufweist, welche eine Vielzahl von benachbarten Reihen von dachförmig, V-förmig oder geneigt ausgebildeten bzw. angeordneten Tropfenabscheiderprofilen besitzt.

Eine derartige Tropfenabscheideranordnung ist beispielsweise aus der EP 0 747 107 B1 bekannt. Die bekannte Anordnung weist eine in Gasströmungsrichtung vordere und hintere Tropfenabscheiderlage auf, die jeweils aus mindestens einer Reihe von in der Form eines V oder eines umgekehrten V angeordneten Tropfenabscheiderprofilen bestehen. Die Profile der hintereinander angeordneten Reihen der vorderen und hinteren Tropfenabscheiderlage sind dabei in Gasströmungsrichtung gegensinnig zueinander angeordnet.

Es ist somit generell bekannt, die mindestens eine Reihe von Tropfenabscheiderprofilen einer Tropfenabscheiderlage V-förmig oder dachförmig anzuordnen. Es ist ferner bekannt, derartige Reihen aus einseitig geneigt angeordneten Tropfenabscheiderprofilen zu bilden.

Generell bringt eine derartige geneigte Anordnung von Tropfenabscheiderprofilen Vorteile in Bezug auf die Tropfenabscheidung und die Reinigung der Profile über geeignete Spülsysteme mit sich, da das abgeschiedene Wasser sowie das verwendete Spülwasser entlang den geneigten Profilen nach unten fließen kann. Durch das Abwärtsfließen entlang den geneigten Profilen werden diese besonders gut gereinigt.

Es wird daher allgemein angestrebt, Tropfenabscheideranordnungen für Rauchgaswäscher etc. mit geneigt ausgebildeten bzw. angeordneten Tropfenabscheiderprofilen zu versehen. Beispielsweise bei runden Rauchgaswäschern kann jedoch ein Teil der Querschnittsfläche konstruktiv bedingt nicht für den Einbau von derartigen geneigten, insbesondere dachförmig oder V-förmig ausgebildeten, Tropfenabscheiderprofilen genutzt werden. Es handelt sich hierbei um die Querschnittsbereiche zwischen den Längsseiten einer Tropfenabscheiderlage und der runden Begrenzungswand des Rauchgaswäschers. Es ist allgemein üblich, diese Totzonen abzudecken, um das Auftreten von Bypassströmungen zu verhindern. Durch derartige Abdeckungen kommt es jedoch partiell zu einer starken Einschnürung der Strömung an der Tropfenabscheiderlage, die hohe Geschwindigkeitsspitzen in der Tropfenabscheiderlage zur Folge hat. Solche hohen Geschwindigkeitsspitzen sind nachteilig und haben zur Folge, dass insgesamt die maximal zulässige Anströmgeschwindigkeit der Tropfenabscheiderlage limitiert werden muss.

Der Erfindung liegt die Aufgabe zugrunde, eine Tropfenabscheideranordnung der eingangs wiedergegebenen Art zu schaffen, die einen besonders guten Tropfenabscheideeffekt besitzt, insbesondere mit einer besonders hohen Anströmgeschwindigkeit angeströmt werden kann.

Diese Aufgabe wird erfindungsgemäß bei einer Tropfenabscheideranordnung der angegebenen Art dadurch gelöst, dass die Anordnung zumindest auf einer Längsseite der mindestens einen Tropfenabscheiderlage mindestens eine Reihe von flachen Tropfenabscheiderprofilen oder flachen Strömungsgleichrichterprofilen aufweist, die den Raum zwischen der Rauchgaswäscherbegrenzungswand und der benachbarten dachförmigen, V-förmigen oder geneigten Tropfenabscheiderprofilreihe zumindest teilweise ausfüllt.

Die Erfindung sieht daher vor, die vorstehend erwähnten Totzonen (Bereiche zwischen der Begrenzungswand des Rauchgaswäschers und den Längsseiten der Tropfenabscheiderlage) mit flachen Tropfenabscheidern oder flachen Strömungsgleichrichtern zumindest teilweise zu bedecken, so dass auf diese Weise die vom Gas durchströmte Fläche vergrößert wird. Durch diese Vergrößerung der Durchströmungsfläche werden die hohen Geschwindigkeitsspitzen im mittleren Bereich der Tropfenabscheiderlage reduziert, so dass insgesamt die Anströmgeschwindigkeit der Tropfenabscheiderlage verringert und eine deutlich höhere, mittlere Anströmgeschwindigkeit der Tropfenabscheiderlage (0,5 m/s-1 m/s) möglich ist.

Vorzugsweise wird natürlich auf beiden Längsseiten der mindestens einen Tropfenabscheiderlage je mindestens eine Reihe von flachen Tropfenabscheiderprofilen oder flachen Strömungsgleichrichterprofilen angeordnet, um gleichmäßige Strömungsverhältnisse zu erreichen.

Erfindungsgemäß erfolgt die Abdeckung der Totzonen mit flachen Tropfenabscheiderprofilen oder flachen Strömungsgleichrichterprofilen. Als flache Tropfenabscheiderprofile finden vorzugsweise die gleichen Tropfenabscheiderprofile Verwendung, die bei den mittig angeordneten geneigten, dachförmigen oder V-förmigen Tropfenabscheidern verwendet werden. Es handelt sich hierbei vorzugsweise um Lamellenabscheider. An den als Prallflächen wirkenden Lamellen fließen die im Gas vorhandenen oder an den Lamellen abgeschiedenen Tropfen herab.

Bei einer anderen Ausführungsform der Erfindung sind die vorstehend erwähnten Totzonen mit flachen Strömungsgleichrichterprofilen abgedeckt. Diese Ausführungsform ist insbesondere dann von Bedeutung, wenn die Tropfenabscheideranordnung aus zwei in Gasströmungsrichtung hintereinander angeordneten Tropfenabscheiderlagen (Grobtropfenabscheider und Feintropfenabscheider) besteht. Hier ist es von Bedeutung, in der ersten Stufe (Grobabscheider) einen höheren Strömungswiderstand einzubauen, damit nicht zu viel Gas durch den Flachabscheider dringt. Auf diese Weise wird die niedrigere zulässige Anströmgeschwindigkeit des nachfolgenden flachliegenden Feinabscheiders nicht überschritten. Insofern eignet sich für diesen Zweck besonders ein flacher Strömungsgleichrichter, der sich beispielsweise aus nebeneinander und mit Abstand voneinander angeordneten rohrförmigen oder stabförmigen Gleichrichterelementen zusammensetzt. Die Größe dieser Gleichrichterelemente und/oder deren Abstand ist dabei so bemessen, dass diese (im wesentlichen) nur eine Gleichrichtungsfunktion übernehmen und keine Agglomerator- und/oder Vorabscheidefunktion durchführen. Die spezielle Dimensionierung von derartigen Gleichrichterelementen sowie von deren Abständen ist dem Fachmann bekannt bzw. kann durch geeignete Versuche ermittelt werden.

Vorzugsweise sind bei der Reihe von flachen Tropfenabscheiderprofilen oder flachen Strömungsgleichrichterprofilen die einzelnen Profile in Längsrichtung der Reihe angeordnet. Das bedeutet, dass sie sich senkrecht zu den Profilen der dachförmigen, V-förmigen oder geneigten Tropfenabscheiderprofilreihen im mittleren Bereich des Rauchgaswäschers erstrecken, die quer zur Längsrichtung der Reihen verlaufen. Auf diese Weise kann mit relativ langen Profilen gearbeitet werden.

In bekannter Weise sind die Profile der einzelnen Reihen mit senkrecht hierzu verlaufenden Seitenwänden verbunden, die die Tropfenabscheiderprofile zu einzelnen Paketen zusammenfassen, welche in Längsrichtung aneinandergereiht die entsprechenden Reihen bilden. Die Seitenwände bilden dabei Befestigungs- und/oder Lagereinrichtungen.

Vorzugsweise ist die erfindungsgemäß ausgebildete Tropfenabscheideranordnung ferner mit einem Spülsystem versehen, um eine periodische Reinigung der Anordnung zu ermöglichen. Derartige Spülsysteme sind bekannt und werden daher an dieser Stelle nicht mehr im einzelnen erläutert. Sie besitzen geeignete Stützkonstruktionen, an denen über und/oder unter der jeweiligen Tropfenabscheiderlage Düsen angeordnet sind, die die jeweilige Tropfenabscheiderlage mit einer entsprechenden Spülflüssigkeit beaufschlagen. Für die zusätzlich angeordneten flachen Tropfenabscheiderprofile oder flachen Strömungsgleichrichterprofile kann ein zusätzliches Spülsystem vorgesehen sein, wobei die jeweilige Stützkonstruktion an den Seitenwänden einer Tropfenabscheiderprofilreihe oder Strömungsgleichrichterprofilreihe angeordnet sein kann, oder die zusätzlichen Reihen von flachen Tropfenabscheiderprofilen oder Strömungsgleichrichterprofilen können mit vom vorhandenen Spülsystem der dachförmigen, V-förmigen oder geneigten Tropfenabscheiderprofilreihen gereinigt werden. Kombinationen beider Ausführungsformen sind natürlich ebenfalls möglich.

Was die Lagerung bzw. Befestigung der flachen Tropfenabscheider oder flachen Strömungsgleichrichter anbetrifft, so ist bei einer bevorzugten Ausführungsform die Reihe der flachen Tropfenabscheiderprofile oder flachen Strömungsgleichrichterprofile auf dem Träger der benachbarten Reihe von dachförmigen, V-förmigen oder geneigten Tropfenabscheiderprofilen und an der Rauchgaswäscherwand gelagert. Bei dieser Ausführungsform sind daher keine zusätzlichen Lager- bzw. Trägereinrichtungen für die Anbringung der flachen Abscheider oder Strömungsgleichrichter erforderlich. Bei einer anderen Ausführungsform der Erfindung ist die Reihe der flachen Tropfenabscheiderprofile oder flachen Strömungsgleichrichterprofile auf einem zusätzlichen Träger gelagert. Dies ist beispielsweise der Fall, wenn mehrere Reihen von flachen Abscheidern oder Strömungsgleichrichtern nebeneinander angeordnet sind, wobei sich die benachbarten Reihen auf einer zusätzlichen Trägerkonstruktion abstützen.

Generell können unabhängig von den dachförmigen, V-förmigen oder geneigten Tropfenabscheidern ein oder mehrere flache Tropfenabscheiderprofile oder Strömungsgleichrichterprofile in Gasströmungsrichtung, d.h. übereinander, vorgesehen sein. Bevorzugt wird jedoch die gleiche Zahl von Abscheidern bzw. Strömungsgleichrichtern übereinander angeordnet, wie dies bei den dachförmigen, V-förmigen oder geneigten Abscheidern der Fall ist. Das bedeutet, dass in der Regel analog zu einer Grobabscheiderstufe und Feinabscheiderstufe der dachförmigen, V-förmigen oder geneigten Abscheider zwei flache Strömungsgleichrichter übereinander angeordnet sind. Bevorzugt wird hierbei die Anordnung eines flachen Strömungsgleichrichters analog zur Grobabscheiderstufe und eines nachgeschalteten flachen Tropfenabscheiders analog zur Feinabscheiderstufe.

Die obere flache Tropfenabscheiderlage wird dabei vorzugsweise über eine an der unteren Tropfenabscheiderlage angeordnete Stützkonstruktion gehalten. Hierbei sind ferner die obere und untere Lage zweckmäßigerweise gemeinsam auf einem Träger der benachbarten Reihe von dachförmigen, V-förmigen oder geneigten Tropfenabscheiderprofilen gelagert. Das gegenüberliegende Ende ist hierbei an der Rauchgaswäscherwand gelagert oder bei mehreren nebeneinander angeordneten Reihen auf einem zusätzlichen Träger.

Die Erfindung wird nachfolgend anhand von Ausführungsbeispielen in Verbindung mit der Zeichnung im einzelnen erläutert. Es zeigen:
- Figur 1: einen schematischen Vertikalschnitt durch eine in einem Rauchgaswäscher angeordnete Tropfenabscheideranordnung;
- Figur 2: eine schematische Teildraufsicht auf die Tropfenabscheideranordnung der Figur 1;
- Figur 3: einen schematischen Teilvertikalschnitt durch eine in einem Rauchgaswäscher angeordnete Tropfenabscheideranordnung in vergrößertem Maßstab;
- Figur 4: einen Teilvertikalschnitt entsprechend Figur 3 durch eine andere Ausführungsform einer Tropfenabscheideranordnung; und
- Figur 5: einen Teilvertikalschnitt entsprechend Figur 3 durch noch eine andere Ausführungsform einer Tropfenabscheideranordnung.

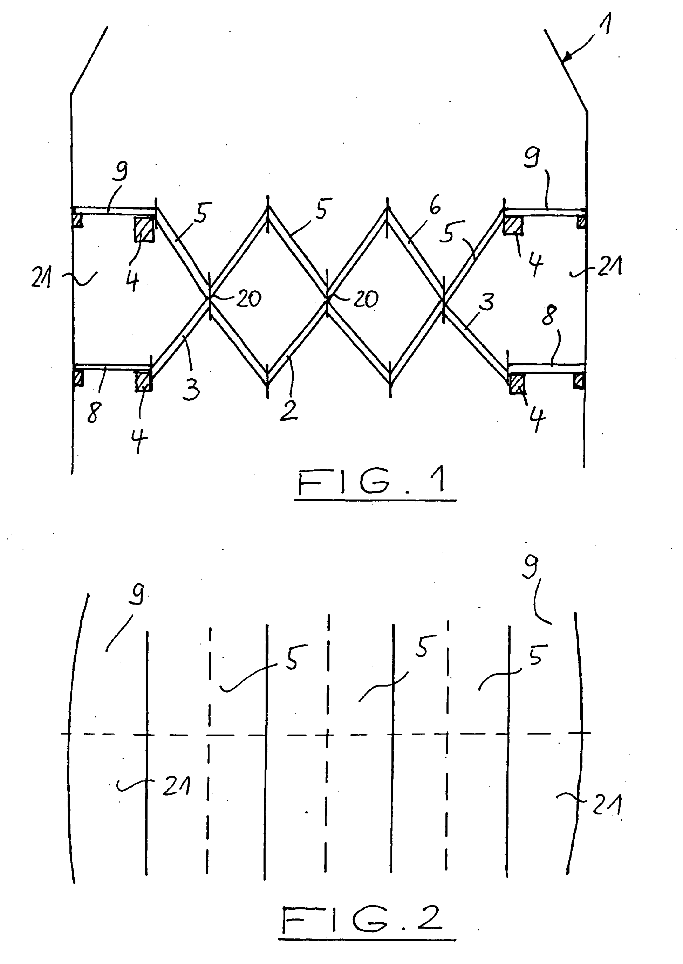

Figur 1 zeigt einen schematisch angedeuteten Rauchgaswäscher 1, in dem sich eine Tropfenabscheideranordnung befindet. Die Tropfenabscheideranordnung besteht aus zwei in Gasströmungsrichtung (durch einen Pfeil angedeutet) hintereinander angeordneten Tröpfenabscheiderlagen 2, 5, von denen die in der Figur untere Lage 2 einen Grobabscheider und die in der Figur obere Lage 5 einen Feinabscheider bildet.

Die untere Tropfenabscheiderlage 2 weist dachförmig ausgebildete Reihen 3 von einzelnen lamellenförmig ausgebildeten Tropfenabscheiderprofilen auf, die auf Trägern 4 gelagert sind. Die Träger 4 und die Reihen 3 der Tropfenabscheiderprofile erstrecken sich dabei in Figur 1 in die Bildebene hinein, während sich die Tropfenabscheiderprofile in der Ebene der Figur 1 erstrecken. Die erste Tropfenabscheiderlage 2 steht über Verbindungswände 20 mit der zweiten Tropfenabscheiderlage 5 in Verbindung, welche sich aus V-förmig ausgebildeten Reihen 6 von Tropfenabscheiderprofilen zusammensetzt. Auch diese Tropfenabscheiderlage 5 ist auf geeigneten Trägern 4 gelagert. Auch die in der Figur obere Tropfenabscheiderlage 5 weist lamellenförmige Tropfenabscheiderprofile auf, die sich in der Ebene der Figur 1 erstrecken.

Eine derartige Anordnung von zwei Tropfenabscheiderlagen ist bekannt, wie eingangs erwähnt, und besitzt besonders gute Reinigungseigenschaften, da sowohl das abgeschiedene Wasser als auch das Spülwasser entlang den dachförmig und V-förmig geneigten Tropfenabscheiderprofilen nach unten laufen und somit die Reinigung der Tropfenabscheiderprofile fördern.

Der in Figur 1 dargestellte Rauchgaswäscher ist im Querschnitt kreisrund ausgebildet. Bei derartigen Rauchgaswäschern kann jedoch etwa 20 % der Querschnittsfläche konstruktiv bedingt nicht für den Einbau von derartigen dachförmig oder V-förmig ausgebildeten Tropfenabscheidern genutzt werden. Bei diesen ungenutzten Bereichen handelt es sich um die Bereiche, die sich in Figur 1 links und rechts von den beiden dachförmig und V-förmig ausgebildeten Tropfenabscheiderlagen befinden. Diese Bereiche sind in Figur 1 und in der Draufsicht der Figur 2 mit 21 bezeichnet.

Wie Figur 1 zeigt, sind diese Bereiche zwischen der Rauchgaswäscherbegrenzungswand 10 und dem Beginn der beiden V-förmigen und dachförmigen Tropfenabscheiderlagen 5, 2 mit Flachabscheidern 8, 9 abgedeckt. Der in der Figur gezeigte untere Flachabscheider 8 entspricht dabei der dachförmig ausgebildeten Tropfenabscheiderlage 2 (Grobabscheiderstufe), während der in der Figur oben dargestellte Flachabscheider 9 der V-förmig ausgebildeten Tropfenabscheiderlage 5 (Feinabscheiderstufe) entspricht. Die Flachabscheider 8, 9 sind an der Begrenzungswand 10 des Rauchgaswäschers und an einem Träger 4 gelagert und füllen den vorstehend erwähnten ungenutzten Raum 21 zumindest zum großen Teil aus.

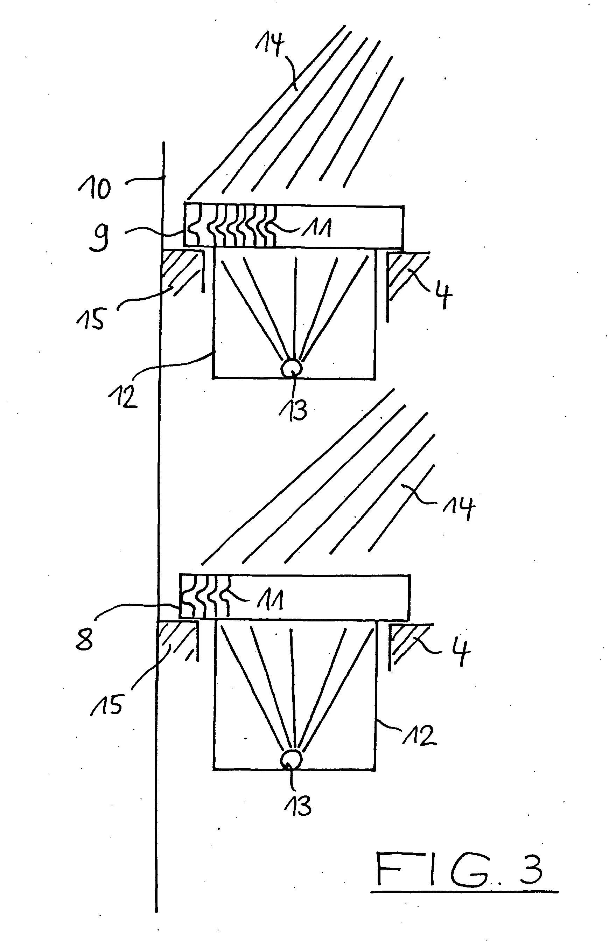

Figur 3 zeigt die Anordnung der Flachabscheider 8, 9 bei einer ersten Ausführungsform im einzelnen. Man erkennt, dass es sich bei den Flachabscheidern 8, 9 um jeweils eine Reihe von lamellenförmigen Profilen 15 handelt, welche als solche bekannt sind. Diese Profile sind über entsprechende Seitenwände zu Paketen zusammengefasst. Die Abscheiderprofile 15 erstrecken sich bei dieser Ausführungsform senkrecht zu den Profilen der V-förmigen und dachförmigen Tropfenabscheider, d.h. senkrecht zur Figurenebene.

Die in Gasströmungsrichtung übereinander angeordneten Tropfenabscheider 8, 9 der Grobabscheiderstufe und Feinabscheiderstufe sind auf einem bauseits vorhandenen Auflagering 11 der Rauchgaswäscherbegrenzungswand 10 und einem Träger 4 für die entsprechende Tropfenabscheiderlage gelagert. Jeder flache Tropfenabscheider 8, 9 weist eine sich nach unten erstreckende Stützkonstruktion 12 für die Lagerung von Düsen 13 auf, die die Tropfenabscheider 8, 9 zu Reinigungszwecken von unten besprühen. Von oben werden die Tropfenabscheider 8, 9 von einer ohnehin vorhandenen Düse der V-förmigen und dachförmigen Abscheiderlagen besprüht, wie bei 14 gezeigt. Bei dieser Ausführungsform sind beide Flachabscheider 8, 9 getrennt voneinander angeordnet und getrennt gelagert.

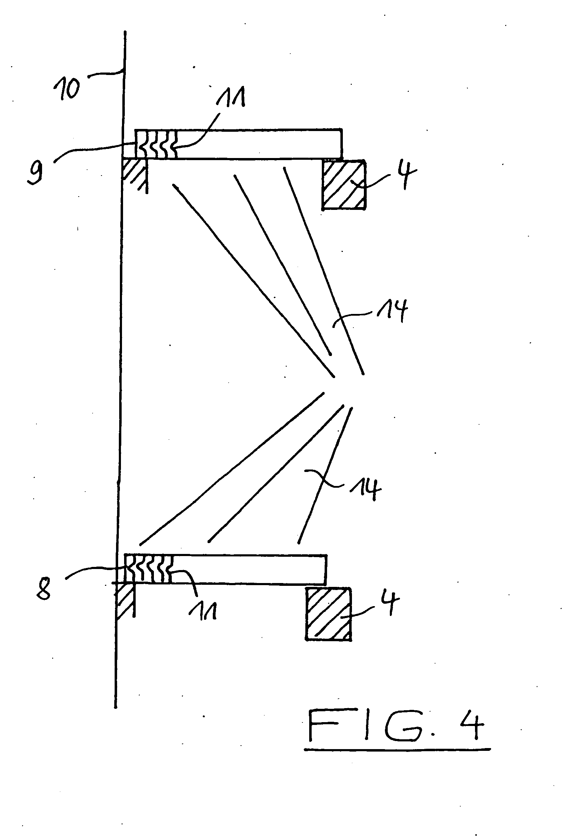

Figur 4 zeigt eine entsprechende Ausführungsform wie Figur 3 mit dem einzigen Unterschied, dass hierbei die Unterseite des in der Figur oberen flachen Tropfenabscheiders 9 und die Oberseite des in der Figur unteren flachen Tropfenabscheiders 8 von einem Düsensystem zu Reinigungszwecken besprüht werden, das ohnehin für die V-förmigen und dachförmigen Tropfenabscheiderlagen vorgesehen ist. Ansonsten sind auch hierbei die beiden Flachabscheider 8, 9 jeweils auf einem Auflagering 15 der Rauchgaswäscherbegrenzungswand 10 und einem Träger 4 der Tropfenabscheiderlagen gelagert.

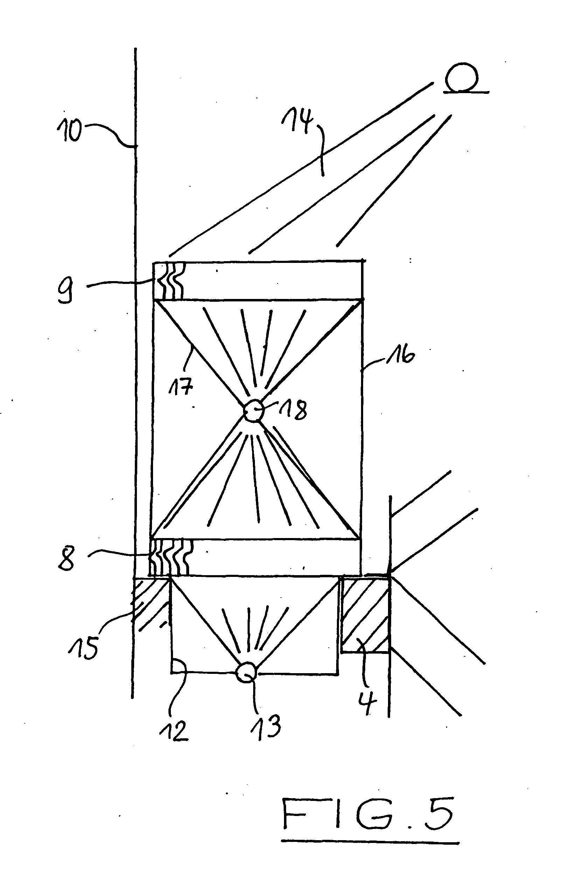

Figur 5 zeigt eine Ausführungsform, die sich von den vorhergehenden Ausführungsformen insbesondere dadurch unterscheidet, dass beide Flachabscheider 8, 9 gemeinsam auf einem einzigen Träger 4 der beiden Tropfenabscheiderlagen 2, 5 gelagert sind. Bei dieser Ausführungsform ist im Gegensatz zu der der Figur 1 die obere Tropfenabscheiderlage dachförmig und die untere Tropfenabscheiderlage V-förmig ausgebildet. Somit ist am seitlichen Rand beider Lagen ein einziger Träger 4 vorhanden, während dies bei der Ausführungsform der Figur 1 zwei übereinander angeordnete Träger sind. Auf diesem einzigen Träger 4 sind, wie erwähnt, beide flachen Tropfenabscheider 8, 9 gelagert.

Wie Figur 5 zeigt, weist hierzu der untere Flachabscheider 8 eine Stützkonstruktion 16 auf, die den oberen Flachabscheider 9 trägt. Zusätzlich zu dieser Stützkonstruktion 16 ist zwischen beiden Abscheidern 8, 9 eine Stützkonstruktion 17 für die Anordnung von Sprühdüsen 18 vorgesehen, mittels denen die Unterseite des oberen Abscheiders 9 und die Oberseite des unteren Abscheiders 8 besprüht werden. Die Unterseite des unteren Abscheiders 8 wird von Düsen 13 besprüht, die an einer Stützkonstruktion 12 befestigt sind, welche vom unteren Flachabscheider 8 getragen wird. Die Oberseite des oberen Flachabscheiders 9 wird von ohnehin vorhandenen Düsen des dachförmigen Abscheidersystems besprüht, wie bei 14 gezeigt.

Bei allen Ausführungsformen wird die durch seitliche Abdeckungen hervorgerufene starke Einschnürung der Strömung an der Tropfenabscheideranordnung vermieden, so dass hohe Geschwindigkeitsspitzen verhindert werden. Insgesamt ist somit eine deutlich höhere, mittlere Anströmgeschwindigkeit der Tropfenabscheideranordnung möglich.

Eine weitere Ausführungsform der Erfindung zeichnet sich dadurch aus, dass die Tropfenabscheideranordnung zumindest auf einer Stirnseite der mindestens einen Tropfenabscheiderlage mindestens eine Reihe von flachen Tropfenabscheiderprofilen oder flachen Strömungsgleichrichterprofilen. aufweist. Diese Lösung wird, da an den Stirnseiten weniger Platz zur Verfügung steht, in der Regel weniger zur Anwendung kommen .

## Patentansprüche

1. Tropfenabscheideranordnung für im Querschnitt runde Rauchgaswäscher u.dgl., die mindestens eine Tropfenabscheiderlage aufweist, welche eine Vielzahl von benachbarten Reihen von dachförmig, V-förmig oder geneigt ausgebildeten bzw. angeordneten Tropfenabscheiderprofilen besitzt, **dadurch gekennzeichnet, dass** die Anordnung zumindest auf einer Längsseite der mindestens einen Tropfenabscheiderlage (2, 5) mindestens eine Reihe (8, 9) von flachen Tropfenabscheiderprofilen oder flachen Strömungsgleichrichterprofilen aufweist, die den Raum (21) zwischen der Rauchgaswäscherbegrenzungswand (10) und der benachbarten dachförmigen, V-förmigen oder geneigten Tropfenabscheiderprofilreihe (3, 6) zumindest teilweise ausfüllt.

2. Tropfenabscheideranordnung nach Anspruch 1, **dadurch gekennzeichnet, dass** auf beiden Längsseiten der mindestens einen Tropfenabscheiderlage (2, 5) je mindestens eine Reihe (8, 9) von flachen Tropfenabscheiderprofilen oder flachen Strömungsgleichrichterprofilen angeordnet ist.

3. Tropfenabscheideranordnung nach einem der vorangehenden Ansprüche, **dadurch gekennzeichnet, dass** die Reihe (8, 9) der flachen Tropfenabscheiderprofile oder flachen Strömungsgleichrichterprofile auf dem Träger (4) der benachbarten Reihe von dachförmigen, V-förmigen oder geneigten Tropfenabscheiderprofilen (3, 6) und an der Rauchgaswäscherbegrenzungswand (10) gelagert ist.

4. Tropfenabscheideranordnung nach Anspruch 1 oder 2, **dadurch gekennzeichnet, dass** die Reihe (8, 9) der flachen Tropfenabscheiderprofile oder flachen Strömungsgleichrichterprofile auf einem zusätzlichen Träger gelagert ist.

5. Tropfenabscheideranordnung nach einem der vorangehenden Ansprüche, **dadurch gekennzeichnet, dass** sie zwei übereinander angeordnete Lagen von je mindestens einer Reihe (8, 9) von flachen Tropfenabscheiderprofilen oder flachen Strömungsgleichrichterprofilen aufweist.

6. Tropfenabscheideranordnung nach Anspruch 5, **dadurch gekennzeichnet, dass** die obere Lage über eine an der unteren Lage angeordnete Stützkonstruktion (16) gehalten wird.

7. Tropfenabscheideranordnung nach Anspruch 5 oder 6, **dadurch gekennzeichnet, dass** die obere und untere Lage gemeinsam auf einem Träger (4) der benachbarten Reihe von dachförmigen, V-förmigen oder geneigten Tropfenabscheiderprofilen gelagert sind.

8. Tropfenabscheideranordnung nach einem der vorangehenden Ansprüche, **dadurch gekennzeichnet, dass** sich die Profile (15) der flachen Tropfenabscheider oder Strömungsgleichrichter senkrecht zu den Profilen der dachförmigen, V-förmigen oder geneigten Tropfenabscheider erstrecken.

9. Tropfenabscheideranordnung nach einem der vorangehenden Ansprüche, **dadurch gekennzeichnet, dass** die Anordnung zumindest auf einer Stirnseite der mindestens einen Tropfenabscheiderlage mindestens eine Reihe von flachen Tropfenabscheiderprofilen oder flachen Strömungsgleichrichterprofilen aufweist.

## Claims

1. A droplet separator arrangement for in cross-section round flue gas washers etc., wherein the droplet separator arrangement has at least one droplet separator layer which includes a plurality of adjacent rows of droplet separator profiles formed or arranged in a roof-like, V-like or inclined manner, **characterized in that** the arrangement has at least one row (8, 9) of flat droplet separator profiles or flat flow rectifying profiles on at least one longitudinal side of the at least one droplet separator layer (2, 5), the at least one row (8, 9) of flat droplet separator profiles or fiat flow rectifying profiles fills at least partly the space (21) between the boundary wall (10) of the flue gas washer and the adjacent roof-like, V-like or inclined droplet separator profile row (3, 6).

2. The droplet separator arrangement according to claim 1, **characterized in that** at least one row (8, 9) of flat droplet separator profiles or flat flow rectifying profiles is arranged on both longitudinal sides of the at least one droplet separator layer (2, 5), respectively.

3. The droplet separator arrangement according to one of the preceding claims, **characterized in that** the row (8, 9) of the flat droplet separator profiles or flat flow rectifying profiles is supported on the support beam (4) of the adjacent row of roof-like, V-like or inclines droplet separator profiles (3, 6) and at the boundary wall (10) of the flue gas washer.

4. The droplet separator arrangement according to claim 1 or 2, **characterized in that** the row (8, 9) of the flat droplet separator profiles or flat flow rectifying profiles is supported on an additional support beam.

5. The droplet separator arrangement according to one of the preceding claims, **characterized in that** it includes two superposed layers of at least one row (8, 9) of flat droplet separator profiles or flat flow rectifying profiles, respectively.

6. The droplet separator arrangement according to claim 5, **characterized in that** the upper layer is held by a support construction (16) arranged at the lower layer.

7. The droplet separator arrangement according to claim 5 or 6, **characterized in that** the upper and lower layers are supported together on a support beam (4) of the adjacent row of roof-like, V-like or inclined droplet separator profiles.

8. The droplet separator arrangement according to one of the preceding claims, **characterized in that** the profiles (15) of the flat droplet separators or flow rectifyers extend perpendicularly with respect to the profiles of the roof-like, V-like or inclined droplet separators.

9. The droplet separator arrangement according to one of the preceding claims, **characterized in that** the arrangement has at least one row of flat droplet separator profiles or flat flow rectifying profiles at at least one front side of the at least one droplet separator layer.

## Revendications

1. Aménagement séparateur de gouttes pour laveurs de gaz de fumée à section transversale ronde et similaires, qui présente au moins une couche séparatrice de gouttes qui possède une pluralité de rangées voisines de profilés séparateurs de gouttes formés ou agencés en forme de toit, en forme de V ou en biais, **caractérisé en ce que** l'aménagement présente, au moins sur un côté longitudinal de la au moins une couche séparatrice de gouttes (2, 5), au moins une rangée (8, 9) de profilés séparateurs de gouttes plats ou de profilés redresseurs d'écoulement plats, qui remplit au moins partiellement l'espace (21) entre la paroi de délimitation (10) du laveur de gaz de fumée et la rangée de profilés séparateurs de gouttes (3, 6) voisine en forme de toit, en forme de V ou en biais.

2. Aménagement séparateur de gouttes selon la revendication 1, **caractérisé en ce que** respectivement au moins une rangée (8, 9) de profilés séparateurs de gouttes plats ou de profilés redresseurs d'écoulement plats est agencée sur les deux côtés longitudinaux de la au moins une couche séparatrice de gouttes (2, 5).

3. Aménagement séparateur de gouttes selon l'une quelconque des revendications précédentes, **caractérisé en ce que** la rangée (8, 9) des profilés séparateurs de gouttes plats ou des profilés redresseurs d'écoulement plats est montée sur le support (4) de la rangée voisine de profilés séparateurs de gouttes en forme de toit, en forme de V ou en biais (3, 6) et sur la paroi de délimitation (10) du laveur de gaz de fumée.

4. Aménagement séparateur de gouttes selon la revendication 1 ou 2, **caractérisé en ce que** la rangée (8, 9) des profilés séparateurs de gouttes plats ou des profilés redresseurs d'écoulement plats est montée sur un support supplémentaire.

5. Aménagement séparateur de gouttes selon l'une quelconque des revendications précédentes, **caractérisé en ce qu'**il présente deux couches superposées de respectivement au moins une rangée (8, 9) de profilés séparateurs de gouttes plats ou de profilés redresseurs d'écoulement plats.

6. Aménagement séparateur de gouttes selon la revendication 5, **caractérisé en ce que** la couche supérieure est maintenue via une structure d'appui (16) agencée sur la couche inférieure.

7. Aménagement séparateur de gouttes selon la revendication 5 ou 6, **caractérisé en ce que** la couche supérieure et la couche inférieure sont disposées conjointement sur un support (4) de la rangée voisine de profilés séparateurs de gouttes en forme de toit, en forme de V ou en biais.

8. Aménagement séparateur de gouttes selon l'une quelconque des revendications précédentes, **caractérisé en ce que** les profilés (15) des séparateurs de gouttes plats ou des redresseurs d'écoulement plats s'étendent perpendiculairement aux profilés des séparateurs de gouttes en forme de toit, en forme de V ou en biais.

9. Aménagement séparateur de gouttes selon l'une quelconque des revendications précédentes, **caractérisé en ce que** l'aménagement présente, au moins sur un côté frontal de la au moins une couche séparatrice de gouttes, au moins une rangée de profilés séparateurs de gouttes plats ou de profilés redresseurs de gouttes plats.
